# EUROPEAN PATENT APPLICATION

(11) **EP 4 372 846 A1**
(43) Date of publication of application: **22.05.2024**
(21) Application number: 23180612.6
(22) Date of filing: 21.06.2023
(51) Int. Cl.: H01M 4/46, H01M 4/66, H01M 4/72, H01M 4/80, H01M 10/054, H01M 4/02

(54) **NEGATIVE ELECTRODE STRUCTURE APPLIED TO AN ALUMINUM BATTERY**

(30) Priority: 27.10.2022 TW 111140965
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); CHEN, Wei-An, 821 Kaohsiung City (TW)
(74) Representative: Becker, Eberhard

(57) **Abstract**

A negative electrode structure applied to an aluminum battery includes a hole material layer (111) and a metal plating layer (112). The metal plating layer (112) is located on the hole material layer (111) such that the capacity decay rate of the aluminum battery is less than 5% per cycle.

## Description

### BACKGROUND

### Technical Field

The disclosure relates to a negative electrode structure applied to an aluminum battery.

### Description of Related Art

Aluminum batteries, as electrochemical energy storage components, have advantages of good security and low cost. Furthermore, the capacity decay rate of the aluminum battery may be affected by the rate of the aluminum dissolution reaction on a negative electrode, and the rate of the aluminum dissolution reaction is closely related to the negative electrode structure. Therefore, how to design a more favorable negative electrode structure to improve the performance of the aluminum battery in terms of the capacity decay rate is indeed a challenge.

### SUMMARY

The disclosure provides a negative electrode structure applied to an aluminum battery, which may improve performance of the aluminum battery in terms of a capacity decay rate and facilitate scale-up production.

A negative electrode structure applied to an aluminum battery of the disclosure includes a hole material layer and a metal plating layer. The metal plating layer is located on the hole material layer such that a capacity decay rate of the aluminum battery is less than 5% per cycle.

In an embodiment of the disclosure, a weight of the metal plating layer on the hole material layer is greater than 2 mg/cm ².

In an embodiment of the disclosure, the weight of the metal plating layer on the hole material layer is less than 100 mg/cm ².

In an embodiment of the disclosure, a specific surface area of the hole material layer is between 100 m ² /g and 3000 m ² /g.

In an embodiment of the disclosure, a material of the hole material layer includes activated carbon, natural graphite, artificial graphite, graphene, carbon black, soft carbon, hard carbon, mesophase graphite carbon microspheres, or a combination thereof.

In an embodiment of the disclosure, the metal plating layer is an aluminum metal plating layer.

In an embodiment of the disclosure, the metal plating layer is electroplated on the hole material layer by ionic liquid.

In an embodiment of the disclosure, the ionic liquid includes aluminum salt-based ionic liquid.

In an embodiment of the disclosure, the metal plating layer is located between a positive electrode structure of the aluminum battery and the hole material layer of the aluminum battery.

In an embodiment of the disclosure, the positive electrode structure includes an intercalation material.

Based on the above, the negative electrode structure of the disclosure applied to the aluminum battery may increase the number of reaction sites on the surface of the negative electrode structure by using the composite electrode design of the hole material layer and the metal plating layer, thereby improving the performance of the aluminum battery in terms of the capacity decay rate (less than 5% per circle) and facilitating the scale-up production.

In order to make the above-mentioned features and advantages of the disclosure clearer and easier to understand, the following embodiments are given and described in details with accompanying drawings as follows.

### BRIEF DESCRIPTION OF THE DRAWINGS

FIG. 1A is a schematic diagram of a negative electrode structure applied to an aluminum battery according to an embodiment of the disclosure.
FIG. 1B is a data diagram of a capacity decay rate of different weights of a metal plating layer on a hole material layer.
FIG. 2 is a schematic diagram of a fabrication of a negative electrode structure according to an embodiment of the disclosure.
FIG. 3 is a schematic diagram of a testing of a negative electrode structure applied to an aluminum battery according to an embodiment of the disclosure.

### DESCRIPTION OF THE EMBODIMENTS

Hereinafter, embodiments of the disclosure are described in details. However, the embodiments are exemplary, and the disclosure is not limited hereto. The disclosure is defined by the scope of the claims.

Exemplary embodiments of the disclosure will be fully described below with reference to the drawings, but the disclosure may also be embodied in many different forms and should not be construed as limited to the embodiments described herein. In the drawings, for the sake of clarity, the sizes and the thicknesses of various regions, parts, and layers may not be drawn in actual scale. In order to facilitate understanding, the same components in the following description will be described with the same reference numerals.

Directional terms (e.g., up, down, right, left, front, back, top, bottom) as used herein are used pictorially by reference only and are not intended to imply an absolute orientation.

Unless otherwise defined, all terms (including technical and scientific terms) used herein have the same meaning as commonly understood by a person having ordinary skill in the art.

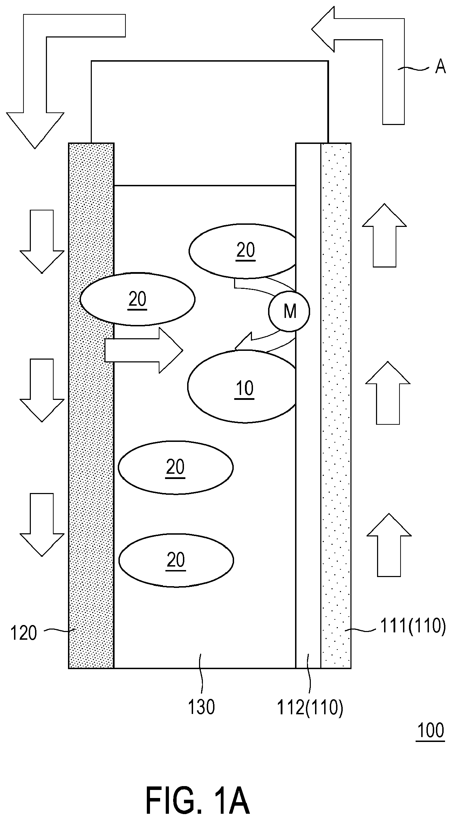

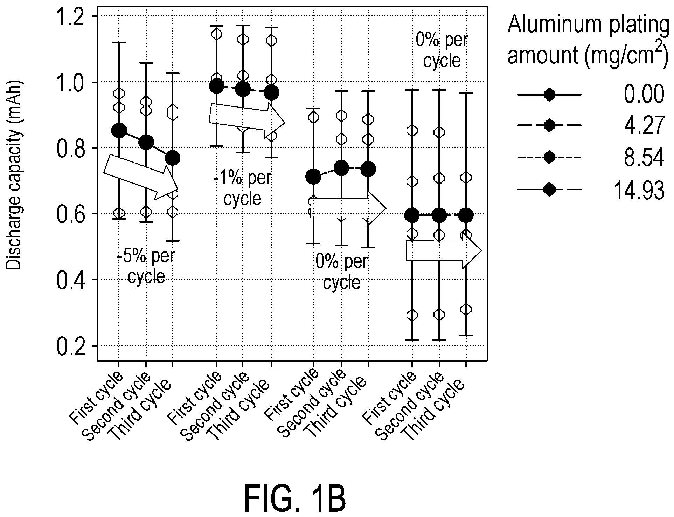

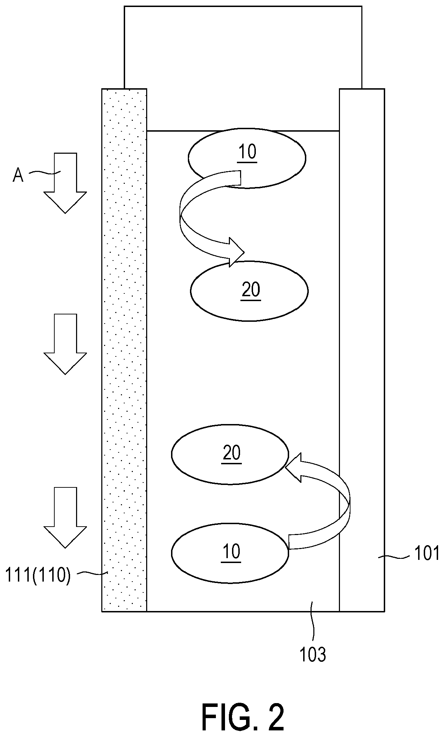

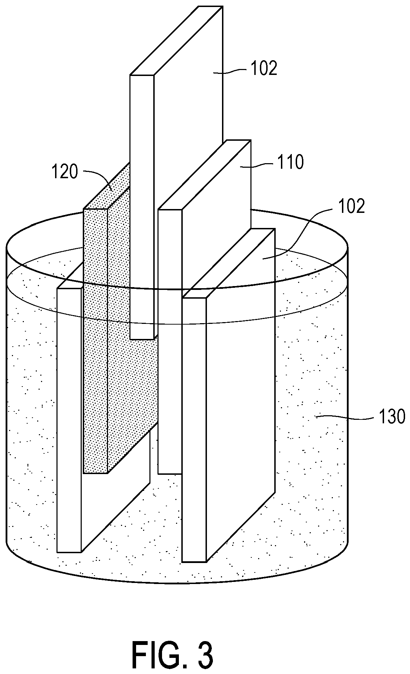

FIG. 1A is a schematic diagram of a negative electrode structure applied to an aluminum battery according to an embodiment of the disclosure. FIG. 1B is a data diagram of a capacity decay rate of different weights of a metal plating layer on a hole material layer. FIG. 2 is a schematic diagram of a fabrication of a negative electrode structure according to an embodiment of the disclosure. FIG. 3 is a schematic diagram of a testing of a negative electrode structure applied to an aluminum battery according to an embodiment of the disclosure.

Please refer to FIG. 1A, FIG. 1B, FIG. 2, and FIG. 3. In the embodiment, a negative electrode structure 110 applied to an aluminum battery 100 includes a hole material layer 111 and a metal plating layer 112. The metal plating layer 112 is located on the hole material layer 111 such that the capacity decay rate of the aluminum battery is less than 5% per cycle. Accordingly, the negative electrode structure 110 applied to the aluminum battery 100 of the embodiment may increase the number of reaction sites on the surface of the negative electrode structure 110 by using the composite electrode design of the hole material layer 111 and the metal plating layer 112, thereby improving the performance of the aluminum battery 100 in terms of the capacity decay rate (less than 5% per cycle) and facilitating the scale-up production.

In some embodiments, the hole material layer 111 may be a high specific surface area material. The specific surface area of the hole material layer 111 is, for example, between 100m²/g and 3000m²/g. Since the hole material layer 111 has characteristics such as a hole structure and a high specific surface area, and the metal plating layer 112 is coated on the hole material layer 111, an active material may perform an oxidation-reduction electrochemical reaction more efficiently, but the disclosure is not limited thereto.

In some embodiments, the material of the hole material layer 111 includes activated carbon, natural graphite, artificial graphite, graphene, carbon black, soft carbon, hard carbon, mesophase graphite carbon microspheres, or a combination thereof, and the metal plating layer 112 is an aluminum metal plating layer, but the disclosure is not limited thereto. Other suitable non-carbon hole materials may also be used for the hole material layer 111.

In some embodiments, as shown in FIG. 2, the metal plating layer 112 may be electroplated on the hole material layer 111 by ionic liquid 103. Further, when the metal plating layer 112 is an aluminum metal plating layer, the ionic liquid 103 may include aluminum salt ionic liquid, so that when a current A flows to the hole material layer 111, an ion 10 (Al₂Cl₇₋) is converted into an ion 20 (AlCl₄-) through the reaction of formula (1): 4Al₂Cl₇₋+3e_{- -}→Al+7AlCl₄₋and a uniform aluminum metal plating layer is electroplated on the hole material layer 111 by using the aluminum salt ionic liquid. Here, the hole material layer 111 may be disposed on a cathode of an electroplating device and an aluminum foil 101 may be disposed on an anode of an electroplating device to electroplate the aluminum metal on the hole material layer 111, but the disclosure is not limited thereto.

In some embodiments, the metal plating layer 112 may be located between a positive electrode structure 120 of the aluminum battery 100 and the hole material layer 111, and an electrolyte 130 is provided between the positive electrode structure 120 and the negative electrode structure 110. The positive electrode structure 120 and the electrolyte 130 may be selected according to actual design requirements and are not limited by the disclosure.

In some embodiments, the weight of the metal plating layer 112 on the hole material layer 111 is greater than 2mg/cm², and the weight of the metal plating layer 112 on the hole material layer 111 is less than 100mg/cm². For example, as shown in FIG. 1B, when the metal plating layer 112 is an aluminum metal plating layer, and the amount of aluminum plating is 0 mg/cm² (that is, there is no metal plating layer 112 formed), the capacity decay rate of the aluminum battery is 5% per cycle; when the amount of aluminum plating is 4.27 mg/cm², the capacity decay rate of the aluminum battery is 1% per cycle (less than 5% per cycle); when the amount of aluminum plating is 8.54 mg/cm² and 14.93 mg/cm², the capacity decay rate of the aluminum battery is 0% per cycle (less than 5% per cycle). That is to say, the degree of improvement of the capacity decay rate is positively correlated with the weight of the metal plating layer 112 on the hole material layer 111.

Here, the positive electrode structure of the aluminum battery of FIG. 1B uses a graphite structure, and the electrolyte uses a chloroaluminate ionic liquid, and other compositions and specifications not described should be obtained by a person having ordinary skill in the art based on any content included in the spirit and the scope of the appended claims. In addition, the experimental data of FIG. 1B is obtained by a testing device of FIG. 3. The testing device of FIG. 3 may fix the spacings between the negative electrode structure 110, the positive electrode structure 120, and the electrolyte 130 of the aluminum battery 100 by a fixing member 102 (such as a glass slide) and may fix the positions of the negative electrode structure 110 and the positive electrode structure 120 so as to carry out the test.

In some embodiments, when the positive electrode structure 120 is an intercalation material, the electrolyte 130 is aluminum halide and imidazole chloride salt, and the metal plating layer 112 is an aluminum metal plating layer, a large amount of aluminum dissolution reaction occurs on the surface of the negative electrode structure 110 during the discharge cycle. A metal M converts the ion 20 (AlCl₄₋) into the ion 10 (Al₂Cl₇₋) through the reaction of formula (2): Al+7AlCl₄₋→4Al₂Cl₇₋+3e₋, so that the problem may be significantly improved with regards to the capacity decay caused by using only carbon-based materials as the negative electrodes of the aluminum batteries, where there is no aluminum source provided on the surface and which may result in a slow aluminum dissolution reaction and an incomplete delamination of the active material in the positive electrode. That is to say, by using the composite electrode design of the hole material layer 111 having a high specific surface area and the metal plating layer 112, the amount of the aluminum dissolution of the negative electrode structure 110 may be increased to react with the ion 20 (AlCl₄₋) delaminated from the positive electrode structure 120 so as to form the ion 10 (Al₂Cl₇₋). As a result, the ion 20 (AlCl₄₋) in the layer spacing of the positive electrode structure 120 may be delaminated and do not remain in the layer spacing substantially, thereby improving the problem of the gradual decay of the electricity caused by excessive active material remaining in the layer spacing during the discharge cycle which may affect the number of active material that may be intercalated at the positive electrode during the next charge cycle when the rate of the aluminum dissolution is less than the delamination rate of the positive electrode. That is, the number of active materials that may be intercalated during subsequent charge and discharge cycles may remain unchanged, thereby effectively improving the capacity decay.

In summary, the negative electrode structure applied to the aluminum battery of the disclosure may increase the number of reaction sites on the surface of the negative electrode structure by using the composite electrode design of the hole material layer and the metal plating layer, thereby improving the performance of the aluminum battery in terms of the capacity decay rate (less than 5%/circle) and facilitating the scale-up production.

## Claims

1. A negative electrode structure (110), applied to an aluminum battery (100), comprising:
a hole material layer (111); and
a metal plating layer (112), located on the hole material layer (111), such that a capacity decay rate of the aluminum battery (100) is less than 5% per cycle.

2. The negative electrode structure (110) according to claim 1, wherein a weight of the metal plating layer (112) on the hole material layer (111) is greater than 2mg/cm².

3. The negative electrode structure (110) according to claim 2, wherein the weight of the metal plating layer (112) on the hole material layer (111) is less than 100mg/cm².

4. The negative electrode structure (110) according to claim 1, wherein a specific surface area of the hole material layer (111) is between 100m²/g and 3000m²/g.

5. The negative electrode structure (110) according to claim 1, wherein a material of the hole material layer (111) comprises activated carbon, natural graphite, artificial graphite, graphene, carbon black, soft carbon, hard carbon, mesophase graphite carbon microspheres, or a combination thereof.

6. The negative electrode structure (110) according to claim 1, wherein the metal plating layer (112) is an aluminum metal plating layer (112).

7. The negative electrode structure (110) according to claim 1, wherein the metal plating layer (112) is electroplated on the hole material layer (111) by an ionic liquid (103).

8. The negative electrode structure (110) according to claim 7, wherein the ionic liquid (103) comprises an aluminum salt-based ionic liquid.

9. The negative electrode structure (110) according to claim 1, wherein the metal plating layer (112) is located between a positive electrode structure (120) of the aluminum battery (100) and the hole material layer (111).

10. The negative electrode structure (110) according to claim 9, wherein the negative electrode structure comprises an intercalation material.
